# EUROPÄISCHE PATENTSCHRIFT

(11) **EP 1 051 066 B1**
(45) Veröffentlichungstag und Bekanntmachung des Hinweises auf die Patenterteilung: **17.11.2004**
(21) Anmeldenummer: 99910090.2
(22) Anmeldetag: 28.01.1999
(51) Int. Cl.: A01G 27/00

(54) **STECKETIKETT FÜR PFLANZEN**
LABEL FOR PLANTS WHICH CAN BE INSERTED INTO THE SOIL
ETIQUETTE ENFICHABLE DANS LA TERRE POUR PLANTES

(30) Priorität: 30.01.1998 DE 29801385 U
(43) Veröffentlichungstag der Anmeldung: 15.11.2000
(73) Patentinhaber: Schlösser, Ulrich, 74397 Pfaffenhofen (DE); Dedden, Lothar, 26160 Bad Zwischenahn (DE); Boxser, Daniel, London W8 6XB (GB)
(72) Erfinder: Schlösser, Ulrich, 74397 Pfaffenhofen (DE); Dedden, Lothar, 26160 Bad Zwischenahn (DE); Boxser, Daniel, London W8 6XB (GB)
(74) Vertreter: Müller, Hans, Dipl.-Ing.
(86) Internationale Anmeldenummer: PCT/DE1999/000222
(87) Internationale Veröffentlichungsnummer: WO 1999/038371

(56) Entgegenhaltungen:
- EP-A- 0 215 600
- EP-A- 0 476 948
- DE-U- 29 801 385
- GB-A- 2 059 077
- US-A- 3 951 098
- US-A- 4 130 012
- US-A- 4 184 445
- US-A- 5 438 796

## Beschreibung

Die Erfindung betrifft ein Etikett zum Kennzeichnen von Pflanzen, das zum Einstecken in Erdreich ausgebildet ist. Derartige Etiketten können in Blumentöpfe, Beete oder in sonstiges Erdreich eingesteckt werden, um einen Hinweis auf in das Erdreich eingepflanzte Pflanzen zu geben.

### STAND DER TECHNIK

Bekannte Etiketten sind aus einem flächigen Material hergestellt. Ihr eines Ende ist angespitzt, wodurch das Etikett sich leicht in Erdreich einschieben läßt. Auf der einen oder auch auf beiden flächigen Ansichtsseiten des Etikettes sind textliche und oftmals auch bildliche Erläuterungen von Pflanzen, Gehölzen und dergleichen aufgebracht. Es sind darüber hinaus Meßstreifen in Form von Feuchtigkeitsfühlern bekannt, die ebenfalls in Erdreich eingesteckt werden können. Diese Feuchtigkeitsfühler können Feuchtigkeit aus dem Erdreich aufsaugen und durch eine dadurch erfolgte mehr oder weniger starke Verfärbung den Feuchtigkeitsgehalt des Erdreiches anzeigen.

EP-A-0 215 600 offenbart ein Etikett gemäß dem Oberbegriff des Anspruchs 1.

### DARSTELLUNG DER ERFINDUNG

Ausgehend von diesem vorbekannten Stand der Technik liegt der Erfindung die Aufgabe zugrunde, ein verbessertes Etikett der eingangs genannten Art anzugeben.

Diese Erfindung ist durch die Merkmale des Anspruchs 1 gegeben. Das erfindungsgemäße Etikett zum Kennzeichnen von Pflanzen zeichnet sich dementsprechend dadurch aus, daß es auch feuchtigkeitssaugend ausgebildet ist. Mit einem derartigen Etikett lassen sich einerseits Pflanzen- beziehungsweise Pflanz-Hinweise und andererseits gleichzeitig auch die in dem Erdreich, in das das Etikett eingesteckt ist, vorhandene Feuchtigkeit erkennen. Die Erfindung beruht auf der Erkenntnis, daß textliche und bildliche Kennzeichnungen für Pflanzen auf einer Ansichtsseite eines Etiketts ausreichend Platz finden können und daß die andere Ansichtsseite, beispielsweise die Rückseite des Etikettes, dann zur Feuchtigkeitsanzeige genutzt werden kann. Obwohl das Wissen über Kenndaten von bestimmten Pflanzen und über den Feuchtigkeitsgehalt des Erdreichs, in das die betreffende Pflanze eingesetzt werden soll, zu den Grundfragen im Gartenbau gehört, ist es überraschend, daß bisher noch niemand auf die Idee gekommen ist, die Beantwortung dieser beiden Fragen durch ein einziges Etikett zu lösen.

Als feuchtigkeitssaugendes Material hat sich Calciumhydroxid als preiswertes und voll funktionsfähiges Material herausgestellt.

Wesentliche Ausführungsformen des erfindungsgemäßen Etikettes sind merkmalsmäßig in den Unteransprüchen angegeben. Diesen Unteransprüchen und dem in der Zeichnung dargestellten Ausführungsbeispiel können weitere Vorteile der Erfindung entnommen werden.

### KURZE BESCHREIBUNG DER ZEICHNUNG

Die Erfindung wird im folgenden anhand des in der Zeichnung dargestellten Ausführungsbeispiels näher beschrieben und erläutert. Es zeigen:
- Fig. 1: eine Ansicht eines in Erdreich eingesteckten Etikettes nach der Erfindung,
- Fig. 2: die Rückseite des Etikettes nach Fig. 1 mit äußerer Abdeckschicht, die transparente Bereiche aufweist,
- Fig. 3: die Vorderseite des Etiketts nach Fig. 1,
- Fig. 4: eine Ansicht ähnlich Fig. 2, mit Darstellung der unterhalb der Abdeckschicht schraffiert dargestellten Leimaufträgen,
- Fig. 5: eine Darstellung ähnlich Fig. 2, mit zwischen den Leimaufträgen vorhandenen Calciumhydroxid-Bereichen,
- Fig. 6: eine Darstellung ähnlich Fig. 2, mit unterhalb der Leim- und Calciumhydroxid-Bereichen vorhandener Farbschicht,
- Fig. 7: eine Darstellung ähnlich Fig. 2, mit unterhalb der Farbschicht nach Fig. 6 sichtbarer Grundplatte.

### WEGE ZUM AUSFÜHREN DER ERFINDUNG

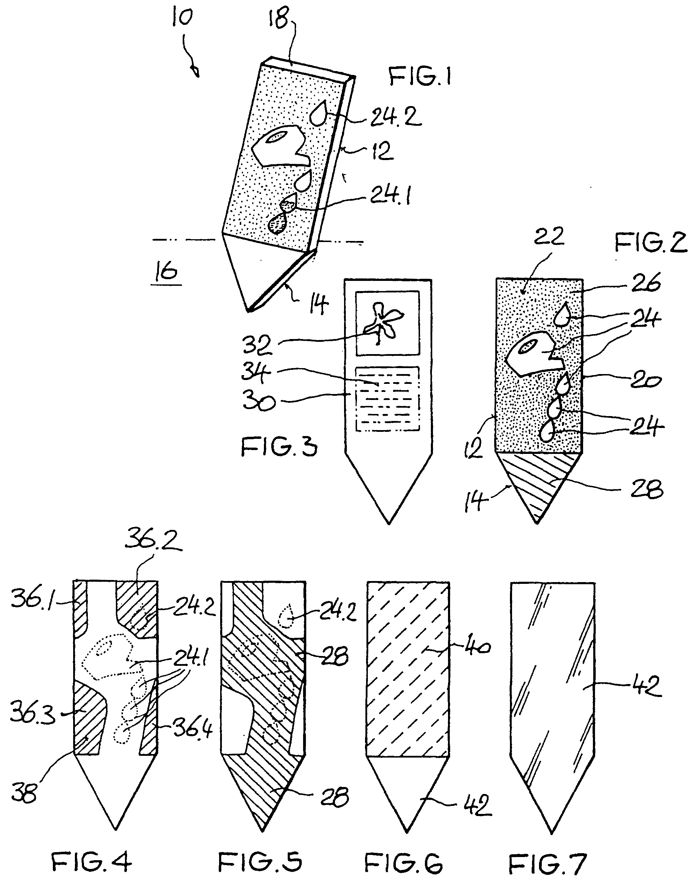

Ein Etikett 10 besteht im vorliegenden Beispielsfall aus einem Flachmaterial aus Kunststoff. Das Etikett 10 besitzt einen in der Ansicht rechteckförmigen oberen Körperabschnitt 12, an dem ein in einer Spitze auslaufender weiterer Körperabschnitt 14 unten einstückig angeformt ist. Durch die Spitzenausbildung dieses Körperabschnittes 14 läßt sich das Etikett 10 leicht in ein Erdreich 16 von oben einstecken. Die Dicke 18 des Etikettes 10 ist sehr klein gegenüber den flächigen Ausdehnungen, die grundrißmäßig in den Figuren 2 ff.dargestellt sind.

In Fig. 2 ist die Rückseite 20 des Etikettes 10 dargestellt. Diese Rückseite ist im Bereich des Körperabschnittes 12 mit einer Abdeckfolie 22 von außen bedeckt. Diese Folie 22 ist im vorliegenden Beispielsfall dunkelgrün gefärbt, was in Fig. 2 gepunktet dargestellt ist. In diesen dunklen Bereichen sind helle transparente Bereiche 24 ausgespart. Diese Bereiche 24 heben sich dadurch von dem sie dunkelgrün umgebenden übrigen Bereich 26 optisch gut ab.

Im Bereich des Körperabschnittes 12 ist eine Kalkschicht (Calciumhydroxid-Schicht) 28 sichtbar, wie noch im Zusammenhang mit Fig. 5 näher beschrieben wird.

Auf der der Rückseite 20 gegenüberliegenden Vorderseite 30 (Fig. 3) des Etikettes 10 ist im oberen Bereich desselben eine bildliche Darstellung 32 und ein textlicher Bestandteil 34 aufgedruckt sichtbar, die beide Erläuterungen zu der durch das Etikett 10 gekennzeichneten Pflanze geben.

Unterhalb der Abdeckfolie 22 sind in vier äußeren Eckbereichen 36.1, 36.2, 36.3 und 36.4 jeweils eine Leimschicht 38 vorhanden. Durch diese Leimschichten wird die Abdeckfolie 22 an dem Etikett 10 gehalten. In dem in der Zeichnung oberen rechten Bereich 36.2 ist gepunktet ein heller transparenter Bereich 24.2 zu erkennen. Dieser transparente Bereich 24.2 liegt damit auf der Leimschicht 38. Die anderen hellen transparenten Bereiche, die aus drei übereinander angeordneten Tropfen 24.1 und einer darüber symbolisch angeordneten Gießkanne 24.3 bestehen, befinden sich nicht in den Leimbereichen 36.1, 36.2, 36.3 oder 36.4. Statt der Tropfen und der Gießkanne könnten auch andere Formen vorhanden sein. Tropfen und Gießkanne deuten aber besonders deutlich die Funktion des Etiketts als Feuchtigkeitsanzeiger an.

Die transparenten Bereiche 24.1 und 24.3 befinden sich zwischen den Leimbereichen 36 in einem zusammenhängenden Bereich 28, der eine Kalkschicht ist. Diese Kalkschicht erstreckt sich bis in den unseren angespitzten Bereich 14 des Etikettes 10.

Unterhalb der Leimschicht 38 und der Kalkschicht 28 ist eine dunkle, im vorliegenden Beispielsfall grüne Farbschicht 40. Diese dunkle Farbschicht ist im Bereich des Körperabschnittes 12 vorhanden.

Die Farbschicht 40 ist auf einer aus Kunststoff oder aus einem anderen wasserfesten Material bestehenden Grundplatte 42 aufgetragen. Die Grundplatte 42 stellt das beispielsweise Flachmaterial dar, aus dem das Etikett 10 hergestellt ist. Auf der in Fig. 7 nicht sichtbaren anderen Ansichtsfläche der Grundplatte 42 sind die bildlichen und textlichen Bestandteile 32, 34 gemäß Fig. 3 zu erkennen.

Das Etikett 10 funktioniert auf folgende Weise.

Durch Einstecken in ein Erdreich 16 dringt Feuchtigkeit in den Bereich der Kalkschicht 28 und steigt in den Bereich des Körperabschnittes 12. Durch die Feuchtigkeit wird der Kalk durchsichtig, so daß dann unter ihm die dunkle, grüne Farbschicht 40 zu erkennen ist. Die hellen transparenten Bereiche 24.1 und 24.3 verfärben sich scheinbar entsprechend grün insoweit, als Feuchtigkeit aus dem Bereich des angespitzten Körperabschnittes 12 nach oben in den Körperabschnitt 12 dringt und die Kalkschicht 28 durchscheinend macht. In Fig. 1 ist die Feuchtigkeit bis in den mittleren der drei tropfenförmigen transparenten Bereiche 24.1 gedrungen. Der untere und der mittlere dieser drei Bereiche 24.1 ist dadurch grün "verfärbt". Das grüne Aussehen dieser ursprünglich hellen transparenten Bereiche 24.1 wird durch die grüne Farbschicht 40 verursacht (Fig. 6), die durch die durchscheinend gewordene feuchte Kalkschicht 28 hindurch sichtbar geworden ist.

Die Verdunkelung der ursprünglich hellen transparenten Bereiche 24 ist also ein Zeichen dafür, wie hoch die Feuchtigkeit in dem Etikett 10 gestiegen ist. Je mehr ursprünglich helle transparente Bereiche 24 sich verdunkelt haben, umso höher ist Feuchtigkeit in das Etikett gestiegen und umso höher ist die Feuchtigkeit im Erdreich 16.

Der helle transparente Bereich 24.2, der im Bereich der Leimschicht 38 plaziert ist (Fig. 4) kann sich nicht verfärben. Unterhalb dieses transparenten Bereiches 24.2 ist keine Kalkschicht (Fig. 5), die sich durch Feuchtigkeit transparent "verfärben" könnte. Die auch unterhalb dieses transparenten Bereiches 24.2 vorhandene dunkle Farbschicht 40 bleibt daher in diesem transparenten Bereich 24.2 unsichtbar.

Sobald die Feuchtigkeit aus dem Etikett entweicht, beispielsweise durch Verdunsten und/oder durch Austrocknen des Erdreichs 16, in das das Etikett gesteckt ist, wird die Kalkschicht 28 wieder hell und optisch undurchsichtig. Die Farbschicht 40 ist dann optisch nicht mehr zu erkennen. Die hellen transparenten Bereiche 24 sind damit als helle Bereiche wieder vorhanden. Das Etikett 10 stellt sich wieder wie in Fig. 2 dargestellt einem Betrachter dar.

## Patentansprüche

1. Etikett (10), das als Feuchtigkeitsanzeiger und zum Einstecken in Erdreich (16) ausgebildet ist,
- mit einem feuchtigkeitssaugenden Material (28) auf einem Bereich einer ersten Oberflächenseite (20),
- wobei das Etikett auf dieser ersten Oberflächenseite (20) folgende übereinanderliegende Schichten enthält:
-- eine erste Grundschicht (42),
-- eine zweite Farbschicht (40), die auf zumindest einem Teilbereich eines oberen Körperabschnittes (12) der ersten Oberflächenseite (20) vorhanden ist,
-- eine dritte Schicht, die besteht
--- einerseits aus einem zusammenhängenden Schichtbereich aus feuchtigkeitssaugendem Material (28), der sich mit seinem Rand bis in einen Teilbereich des oberen Körperabschnittes (12) und bis in einen weiteren, unteren Körperabschnitt (14) des Etikettes (10) erstreckt, und
--- andererseits aus vier Eckbereichen (36.1, 36.2, 36.3, 36.4) mit jeweils einer Leimschicht (38), in denen der Schichtbereich aus feuchtigkeitssaugendem Material (28) nicht vorhanden ist, derart, dass die Eckbereiche (36.1, 36.2, 36.3, 36.4), die eine Leimschicht (38) aufweisen, den Schichtbereich aus feuchtigkeitssaugendem Material (28) nicht vollständig einrahmen,
**dadurch gekennzeichnet, dass**
- in einem Bereich auf einer anderen Oberflächenseite (30) bildliche und/oder textliche Hinweise (32, 34) für die durch das Etikett zu kennzeichnenden Pflanzen vorhanden sind,
- die vier Eckbereiche (36.1, 36.2, 36.3, 36.4) vollständig mit der Leimschicht (38) bedeckt sind,
- eine vierte, dunkle Abdeckschicht (22) des oberen Körperabschnittes (12), die den Schichtbereich aus feuchtigkeitssaugendem Material (28) im oberen Körperabschnitt (12) bedeckt, transparente Bereiche (24) aufweist,
- wobei ein erster transparenter Bereich (24.1) den Schichtbereich aus feuchtigkeitssaugendem Material (28) teilweise bedeckt, und
- wobei ein zweiter transparenter Bereich (24.2) einen Bereich (36.2) der Leimschicht (38) bedeckt.

2. Etikett nach Anspruch 1,
**dadurch gekennzeichnet, dass**
- das feuchtigkeitssaugende Material Calciumhydroxid (28) enthält.

3. Etikett nach Anspruch 1,
**dadurch gekennzeichnet, dass**
- die Grundschicht eine Kunststoff-Platte (42) ist.

4. Etikett nach Anspruch 1,
**dadurch gekennzeichnet, dass**
- die Abdeckschicht eine Kunststoffolie (22) ist.

5. Etikett nach Anspruch 1,
**dadurch gekennzeichnet, dass**
- die dunkle Farbschicht (40) grün ist.

6. Etikett nach Anspruch 1,
**dadurch gekennzeichnet, dass**
- die Abdeckschicht (22) in ihrem transparenten Bereich (24) hellfarbig und in anderen Bereichen dunkelfarbig ist.

## Claims

1. Marker (10), which is designed as a moisture indicator and for inserting into earth (16),
- with a moisture-absorbing material (28) on one region of a first side of the surface (20),
- the marker comprising on this first side of the surface (20) the following layers lying one on top of the other:
- a first base layer (42),
- a second layer of ink (40), which is present on at least a subregion of an upper body portion (12) of the first side of the surface (20),
- a third layer, which comprises
- on the one hand a continuous layer region of moisture-absorbing material (28), which extends with its edge into a subregion of the upper body portion (12) and into a further, lower body portion (14) of the marker (10), and
- on the other hand four corner regions (36.1, 36.2, 36.3, 36.4) each with a layer of glue (38), in which the layer region of moisture-absorbing material (28) is not present, such that the corner regions (36.1, 36.2, 36.3, 36.4) which have a layer of glue (38) do not fully enclose the layer region of moisture-absorbing material (28),
**characterized in that**
- pictorial and/or textual indications (32, 34) for the plants to be identified by the marker are present in a region on another side of the surface (30),
- the four corner regions (36.1, 36.2, 36.3, 36.4) are completely covered by the layer of glue (38),
- a fourth, dark covering layer (22) of the upper body portion (12), which covers the layer region of moisture-absorbing material (28) in the upper body portion (12), has transparent regions (24),
- a first transparent region (24.1) partially covering the layer region of moisture-absorbing material (28), and
- a second transparent region (24.2) covering a region (26.2) of the layer of glue (38).

2. Marker according to Claim 1, **characterized in that**
- the moisture-absorbing material contains calcium hydroxide (28).

3. Marker according to Claim 1, **characterized in that**
- the base layer is a plastic plate (42).

4. Marker according to Claim 1, **characterized in that**
- the covering layer is a plastic film (22).

5. Marker according to Claim 1, **characterized in that**
- the dark layer of ink (40) is green.

6. Marker according to Claim 1, **characterized in that**
- the covering layer (22) is light-coloured in its transparent region (24) and dark-coloured in other regions.

## Revendications

1. Etiquette (10), conçue comme indicateur d'humidité et destinée à être fichée dans la terre (16),
- comportant un matériau absorbant l'humidité (28) sur une zone d'une première surface (20),
- l'étiquette présentant sur cette première surface (20) la succession de couches suivante :
- une première couche de base (42),
- une seconde couche de couleur (40) qui s'étend sur au moins une zone partielle d'une partie de corps supérieure (12) de la première surface (20),
- une troisième couche, qui se compose
- d'une part d'une zone de couche contiguë de matériau absorbant l'humidité (28), qui, avec son bord, s'étend jusque dans une zone partielle de la partie de corps supérieure (12) et jusque dans une autre partie de corps inférieure (14) de l'étiquette (10), et
- d'autre part, de quatre zones d'angle (36.1, 36.2, 36.3 et 36.4) pourvues respectivement d'une couche de colle (38) et dépourvues de zone de couche de matériau absorbant l'humidité (28), de telle sorte que les zones d'angle (36.1, 36.2, 36.3 et 36.4), qui présentent une couche de colle (38) n'englobent pas totalement la zone de couche de matériau absorbant l'humidité (28),
**caractérisée en ce que**
- des indications de type texte et/ou illustration (32/34) sont prévues dans une zone sur une autre surface (30) de l'étiquette qui servent à caractériser la plante,
- les quatre zones d'angle (36.1, 36.2, 36.3 et 36.4) sont intégralement recouvertes de la couche de colle (38),
- une quatrième couche de protection sombre (22) de la partie de corps supérieure (12), qui recouvre la zone de couche de matériau absorbant l'humidité (28) dans la partie de corps supérieure (12) présente des zones transparentes (24),
- une première zone transparente (24.1) recouvrant pour partie la zone de couche de matériau absorbant l'humidité (28), et
- une seconde zone transparente (24.2) recouvrant une zone (36.2) de la couche de colle (38).

2. Etiquette selon la revendication 1, **caractérisée en ce que** le matériau absorbant l'humidité contient de l'hydroxyde de calcium (28).

3. Etiquette selon la revendication 1, **caractérisée en ce que** la couche de base est une plaque de plastique (42).

4. Etiquette selon la revendication 1, **caractérisée en ce que** la couche de protection est un film de plastique (22).

5. Etiquette selon la revendication 1, **caractérisée en ce que** la couche de couleur sombre (40) est de couleur verte.

6. Etiquette selon la revendication 1, **caractérisée en ce que** la couche de protection (22) est de couleur claire dans sa zone transparente (24) et qu'elle est de couleur sombre dans les autres zones.
